Europäisches Patentamt

European Patent Office

Office européen des brevets

(11) Veröffentlichungsnummer: **0 163 232**
**B1**

(12) **EUROPÄISCHE PATENTSCHRIFT**

(45) Veröffentlichungstag der Patentschrift: **18.07.90**

(51) Int. Cl.⁵: **B 60 J 5/10**

(21) Anmeldenummer: **85106180.4**

(22) Anmeldetag: **21.05.85**

(54) **Mehrzweckpersonenkraftwagen, insbesondere Kombi.**

(30) Priorität: **30.05.84 DE 3420349**

(43) Veröffentlichungstag der Anmeldung:
**04.12.85 Patentblatt 85/49**

(45) Bekanntmachung des Hinweises auf die
Patenterteilung:
**18.07.90 Patentblatt 90/29**

(84) Benannte Vertragsstaaten:
**DE FR GB IT SE**

(56) Entgegenhaltungen:
**FR-A-1 447 042**
**US-A-3 333 889**
**US-A-4 184 709**
**US-A-4 272 121**

**KAROSSERIE UND FAHRZEUGBAU, Band 12,
Heft 9, September 1959, Seiten 16-18; E.**

**SEIFERT "Station-Sedan SCIMITAR"
MOT, Heft 1, Januar 1984, Seiten 68-71; "Volvo
Forschungsauto LCP 2000"**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Bez, Ulrich, Dr.
Eichenstrasse 13
D-8134 Pöcking (DE)**

(74) Vertreter: **Dexheimer, Rolf
Bayerische Motoren Werke Aktiengesellschaft
Postfach 40 02 40 Petuelring 130 - AJ-21
D-8000 München 40 (DE)**

**Beschreibung**

Die Erfindung bezieht sich auf einen Mehrzweckpersonenkraftwagen, insbesondere Kombi nach dem Oberbegriff des Hauptanspruchs.

Ein solcher Personenkraftwagen geht aus der Zeitschrift "Karosserie und Fahrzeugbau" Jg. 12, Heft 9 vom September 1959, Seite 16 bis 18 hervor. Bei diesem Fahrzeug ist die Hecktür im Bodenbereich der Seitenwände angelenkt. Dadurch benötigt sie beim Öffnen verhältnismäßig viel Freiraum, der aber beispielsweise durch dicht hintereinander geparkte Fahrzeuge nicht immer gegeben ist. In einem solchen Fall ist das Öffnen der Hecktür behindert, wenn nicht ganz ausgeschlossen.

Das gattungsgemäße Fahrzeug eignet sich besonders gut für den Transport sperriger Güter. Sind jedoch diese Güter sehr schwer, gedacht sei hier beispielsweise an einen Kühlschrank oder eine Waschmaschine, so ergibt sich durch die nach unten schwenkende Hecktür ein weiterer Nachteil. Denn bevor dieses Gut in das Wageninnere geschoben werden kann, muß es zunächst einmal auf der ausgeklappten Hecktür abgestellt werden bzw. wird diese durch das Gewicht belastet. Die Hecktür muß demnach sehr massiv, insbesondere im Bereich ihrer Scharniere, ausgeführt sein. Diese Maßnahme verteuert das Fahrzeug und erhöht darüber hinaus dessen Gewicht. Verzichtet man auf eine verstärkte Ausführung der Hecktür, besteht die Gefahr, daß ein Benutzer des Fahrzeugs beim Verladen eines solchen schweren Gutes das Fahrzeug beschädigt. Außerdem wird die Zugänglichkeit zum Innenraum durch die Klappe behindert.

Aufgabe der Erfindung ist es, einen gattungsgemäßen Mehrzweckpersonenkraftwagen so weiterzuentwickeln, daß er auch problemlos bei beengten Platzverhältnissen beladen werden kann und bei dem nicht die Gefahr besteht, daß beim Beladen schwerer Güter die Hecktür beschädigt werden kann.

Die Aufgabe wird erfindungsgemäß dadurch gelöst, daß die Hecktür mit zwei als Fensterrahmen für die Heckscheibe dienenden Armen an den oberen, hinteren Endbereichen des Fahrzeugaufbaus angelenkt ist.

Durch diese Maßnahme läßt sich das Fahrzeug auch dann beladen, wenn es in einer engen Parklücke steht. Des weiteren kann man es unmittelbar beladen, da hierfür die Hecktür nicht mehr im Wege steht. Der Nutzen des Fahrzeugs erhöht sich dadurch beträchtlich.

Zwar geht aus der Zeitschrift "mot" Heft 1 vom 04. Januar 1984, Seite 68 ein Personenkraftwagen hervor mit oben angelenkter Hecktür. Jedoch ist der Nutzungsbereich dieses Fahrzeugs erheblich eingeschränkt, da die Größe des Ladeguts begrenzt ist und bei großen, über den Dachrand hinausragenden Gütern die Hecktür sich nicht mehr schließen läßt. Diesen Nachteil weist der erfindungsgemäße Personenkraftwagen nicht auf.

Durch die erfindungsgemäße Kombination der Merkmale ist ein Mehrzweckpersonenkraftwagen darstellbar, der neben den für einen Personenwagen üblichen Nutzungsarten weitere Nutzungsmöglichkeiten bietet, wie das problemlose Verladen und Transportieren sperriger Güter.

Beim Beladen eines solchen sperrigen Gutes, das in seiner Größe die lichte Höhe der Fahrgastzelle übersteigt, wird zunächst die Heckscheibe versenkt, die Hecktür nach oben geschwenkt und der hintere Dachabschnitt entfernt. Dadurch und wegen der fehlenden Dachquerverbindung eröffnet sich ein nach oben nahezu unbeschränkter direkter Zugang zum Fahrzeug. Die Zugänglichkeit wird nicht wie bei dem vorbekannten Fahrzeug durch eine heruntergeklappte Hecktür erschwert. Ist das Ladegut im Fahrzeug verstaut, läßt sich die Hecktür mit der versenkten Heckscheibe über das Ladegut hinweg in Schließstellung verschwenken. Das wiederum erlaubt das in der Zeitschrift "mot" dargestellten Fahrzeug nicht.

Im allgemeinen ist das Schwenken der Hecktür eine reine Rotationsbewegung. In bestimmten Anwendungsfällen kann dieser Rotationsbewegung auch noch eine translatorische Bewegung überlagert sein.

In einer vorteilhaften Ausführung läßt sich die Heckscheibe automatisch versenken, sobald die Hecktür geöffnet wird. In diesem Fall ist es zweckmäßig, Mittel vorzusehen, mit denen dieser Mechanismus ausgeschaltet werden kann.

Ein weiterer Vorteil gegenüber dem Fahrzeug nach "mot" besteht in der Möglichkeit, im Fahrzeuginneren bei geschlossener Hecktür eine gute Durchlüftung zu erreichen, indem der hintere Dachabschnitt entfernt wird. Dieser hintere Dachabschnitt könnte als Schiebe- oder Faltdach ausgelegt sein. Es ist aber auch möglich, ihn als herausnehmbaren Deckel vorzusehen oder als eine Kombination aus Schiebedach und herausnehmbaren Deckel.

Insgesamt läßt sich sagen, daß durch die Kombination der im Hauptanspruch aufgeführten Merkmale, die zwar für sich einzeln aus dem Stand der Technik entnehmbar sind, ein Mehrzweckpersonenkraftwagen darstellbar ist, der einen erheblich erweiterten Nutzungsbereich aufweist gegenüber den bekannten Fahrzeugen. Dies ist insbesondere auf das sich gegenseitig ergänzende vorteilhafte Zusammenwirken jedes einzelnen Merkmals der Gesamtkombination zurückzuführen.

In einer vorteilhaften Ausgestaltung sieht die Erfindung ein Hochdach vor, daß auf dem eigentlichen Fahrzeugdach befestigbar ist. Durch dieses Hochdach lassen sich ebenfalls sperrige Güter transportieren. Zwar sind hier bei dieser Art von Gütern Grenzen gesetzt, jedoch ergibt sich hier der Vorteil, daß das Fahrzeug beim Transport verschlossen ist. Zweckmäßig ist es, das Hochdach mit seinem vorderen Abschnitt am Fahrzeugdach anzulenken. So kann es beim Verladen etwas aufgestellt werden. Das Hochdach läßt sich aber auch beispielsweise über Schnellverschlüsse fest mit dem Fahrzeugdach verbinden. In diesem Fall ist es vorteilhaft, wenn es am hinteren Abschnitt eine nach oben schwenkbare Klappe aufweist, die das Beladen erleichtert. Eine solche Klappe kann selbstverständlich auch für die angelenkte Ausführung vorgesehen sein.

In zweckmäßiger Weise überdeckt das Hochdach den Abschnitt des Fahrzeugdachs, der entfernbar ist. Es kann aber auch zweckmäßig sein, es nach vorne zu verlängern. In diesem Fall bildet sich ein weiterer Nutzraum aus, der beispielsweise zum Verstauen von Skiern dienen kann. Dabei bildet den Boden dieses Nutzraumes das Fahrzeugdach. Es ist aber auch möglich am Hochdach einen vom Fahrzeugdach getrennten Boden vorzusehen.

Nachfolgend werden zwei vorteilhafte Ausführungsbeispiele der Erfindung näher beschrieben und in der dazugehörigen Zeichnung dargestellt. Die Zeichnung zeigt in

Fig. 1 einen erfindungsgemäßen Personenkraftwagen mit geschlossener Hecktür,

Fig. 2 den gleichen Personenkraftwagen mit halb geöffneter Hecktür und Schiebedach,

Fig. 3 einen erfindungsgemäßer Personenkraftwagen mit aufgesetztem Hochdach und

Fig. 4 das Fahrzeug nach Figur 3 in perspektivisch auseinandergezogener Darstellung.

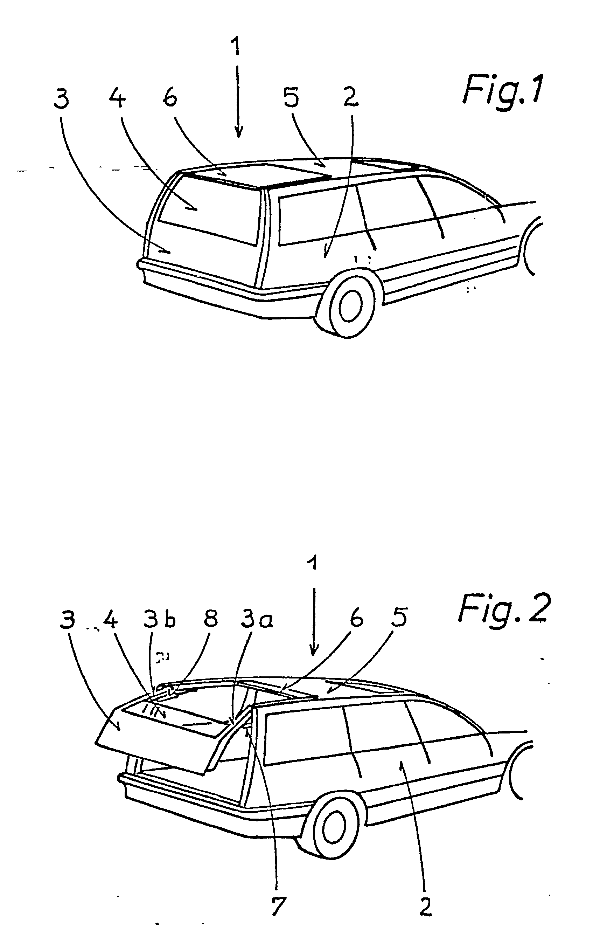

Die Figuren 1 und 2 zeigen ein Merhzweckpersonenkraftwagen 1, der als Kombi-Fahrzeug ausgelegt ist. Der Fahrzeugaufbau 2 weist eine Hecktür 3 auf, die versenkbar eine Heckscheibe 4 aufnimmt. Das Fahrzeugdach 5 unterteilt sich in einen vorderen starren Abschnitt und einen beweglichen hinteren Dachabschnitt 6. Der Dachabschnitt 6 ist als Schiebedach ausgebildet, das sich in Fahrtrichtung nach vorne öffnen läßt.

In Figur 1 sind sowohl der Dachabschnitt 6 als auch die Heckscheibe 4 geschlossen. Sie liegen in diesem Zustand dichtend aneinander. In Figur 2 sind diese beiden Teile fast vollständig geöffnet dargestellt. Außerdem zeigt diese Figur die Hecktür 3 im halb geöffneten Zustand. Dadurch werden Arme 3a, 3b der Hecktür 3 erkennbar, mit denen sie an den oberen hinteren Endbereichen des Fahrzeugaufbaus 2, genauer an den Seitenwänden angelenkt ist. Die Arme 3a, 3b dienen außerdem als Fensterrahmen für die Heckscheibe 4. Gasfeden 7 und 8 erleichtern das Öffnen und Schließen der Hecktür 3.

Der Mehrzweckpersonenkraftwagen 1 läßt sich im Zustand nach Figur 1 als normaler Personenkraftwagen verwenden. Der Dachabschnitt 6 kann etwas geöffnet werden. Dadurch erhält man eine gute Durchlüftung des Fahrgastinnenraums.

In Figur 2 ist der Benutzer des Fahrzeugs gerade im Begriff das Fahrzeug zum Transportieren eines sperrigen Gutes, beispielsweise eines Fahrrades vorzubereiten. Wie bereits erwähnt, befindet sich der Dachabschnitt 6 und die Heckscheibe 4 nahezu in ihrer Offenstellung. Durch ein weiteres Verschwenken der Hecktür 3 nach oben läßt sich bequem des Transportgut in das Fahrzeug 1 einladen. Hernach wird die Hecktür 3 über des Transportgut hinweg nach unten verschwenkt und geschlossen.

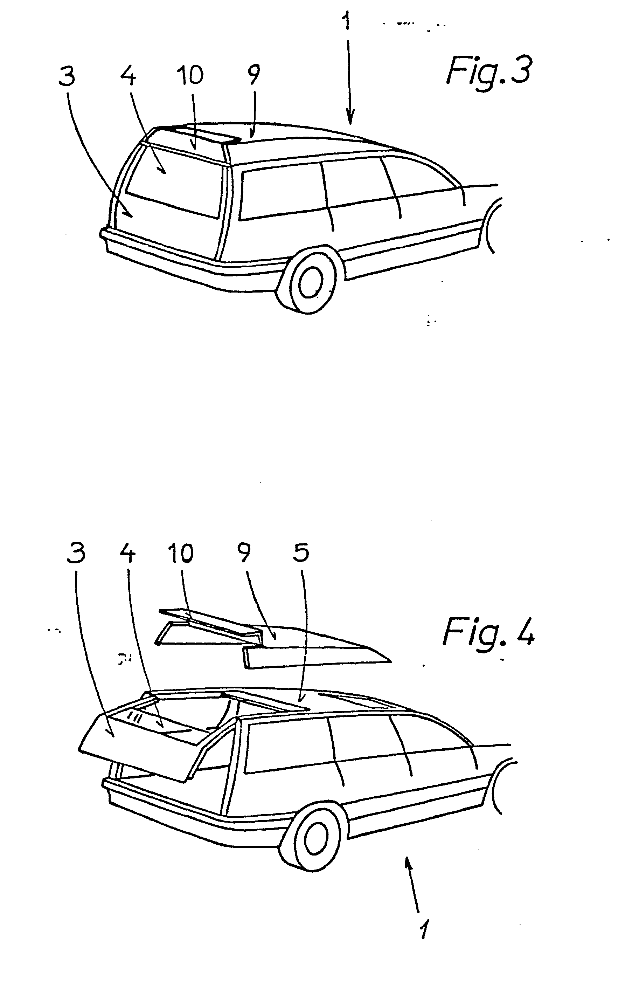

Figur 3 und 4 zeigen in Prinzip den gleichen Merhzweckpersonenkraftwagen 1, lediglich trägt er hier ein Hochdach 9. In Figur 4 ist aus Gründen der besseren Verständlichkeit das Hochdach 9 getrennt über dem Fahrzeug 1 gezeichnet. Das Hochdach läßt sich mit Schnellverschlüssen (nicht gezeichnet) am eigentlichen Fahrzeugdach 5 befestigen. Außerdem weist es an seinem hinteren Abschnitt eine nach oben schwenkbare Klappe 10 auf, die in ihrem geschlossenen Zustand mit der nach oben gefahrenen Scheibe 4, wie Figur 3 zeigt, zusammenwirkt. Dabei kann dieses Zusammenwirken ein bloßes Abdichten des Fahrzeuginnenraumes sein. Es ist aber auch möglich, daß der obere Rand der Heckscheibe 4 in einen entsprechenden Aufnahmekanal der Klappe 10 einfährt und diese dadurch vor unbefugtem Öffnen sichert.

Wird das Fahrzeug mit diesem Hochdach bestückt, befindet sich zweckmäßigerweise der Dachabschnitt 6 in seinem geöffneten Zustand. Es ergibt sich dadurch ein vergrößertes, nach außen hin abgeschlossenes Nutzvolumen, das beispielsweise für den Transport von den erwähnten Fahrrädern ausreicht. Wird der Heckabschnitt 6 geschlossen, so lassen sich in dem Nutzraum zwischen Fahrzeugdach 5 bzw. Dachabschnitt 6 und Hochdach 9 längliche Gegenstände wie Skier verstauen.

## Patentansprüche

1. Mehrzweckpersonenkraftwagen, insbesondere Kombi mit einer Hecktür, die eine versenkbare Heckscheibe aufnimmt, mit einem hinteren, beweglichen Dachabschnitt, gegen den die geschlossene Heckscheibe anliegt, und ohne Dachquerverbindung zwischen den hinteren, oberen Abschnitten der Seitenwände, dadurch gekennzeichnet, daß die Hecktür (3) mit zwei als Fensterrahmen für die Heckscheibe (4) dienenden Armen (3a, 3b) an den oberen, hinteren Endbereichen des Fahrzeugaufbaus (2) angelenkt ist.

2. Personenkraftwagen nach Anspruch 1, dadurch gekennzeichnet, daß das bewegliche Dachteil (6) als herausnehmbares Dachteil oder als eine Kombination von Schiebe- und herausnehmbaren Dachteil ausgebildet ist.

3. Personenkraftwagen nach Anspruch 1 oder 2, dadurch gekennzeichnet, daß die Scharniere der Hecktür eine Rotationsbewegung oder eine kombinierte Rotations- und Translationsbewegung zulassen.

4. Personenkraftwagen nach einem der Ansprüche 1 bis 3, dadurch gekennzeichnet, daß die Heckscheibe (4) beim Öffnen der Hecktür (3) automatisch versenkt wird.

5. Personenkraftwagen nach einem der Ansprüche 1 bis 4, dadurch gekennzeichnet, daß auf dem Fahrzeugdach (5) ein Hochdach (9) befestigbar ist.

6. Personenkraftwagen nach Anspruch 5, dadurch gekennzeichnet, daß das Hochdach (9) mit seinem vorderen Abschnitt am Fahrzeugdach (5) schwenkbar angeordnet ist.

7. Personenkraftwagen nach Anspruch 5 oder 6, dadurch gekennzeichnet, daß das Hochdach (9) eine hintere nach oben schwenkbare Klappe (10) aufweist, die im geschlossenen Zustand mit der hochgefahrenen Heckscheibe (4) zusammenwirkt.

## Revendications

1. Voiture particulière à fonction multiple, notamment break avec hayon contenant une glace descendante, avec une section de toit arrière mobile, contre laquelle vient en contact la glace de hayon, sans entretoise de toit entre les sections supérieures arrière des parois latérales, caractérisée en ce que le hayon (3) est articulé à l'aide de deux bras (3a, 3b) servant de cadre de fenêtre à la glace arrière (4), sur les zones terminales arrière supérieures de la caisse du véhicule (2).

2. Voiture particulière selon la revendication 1, caractérisée en ce que la partie mobile de toit (6) est réalisé en pièce de toit démontable ou comme une combinaison de pièce de toit démontable et coulissante.

3. Voiture particulière selon l'une des revendications 1 ou 2, caractérisée en ce que les charnières du hayon permettent un mouvement de rotation ou un mouvement combiné de rotation et de translation.

4. Voiture particulière selon l'une des revendications 1 ou 3, caractérisée en ce que la glace de hayon (4) est abaissée automatiquement quand on ouvre le hayon (3).

5. Voiture particulière selon l'une des revendications 1 ou 4, caractérisée en ce qu'on peut fixer sur le toit du véhicule (5) un toit surélevé.

6. Voiture particulière selon la revendication 5, caractérisée en ce que le toit surélevé (9) est disposé en pivotement avec sa section antérieure sur le toit du véhicule (5).

7. Voiture particulière selon la revendication 5 ou 6, caractérisée en ce que le toit surélevé (9) présente un volet arrière (10) pivotable vers le haut qui a l'état fermé coopère avec la glace de hayon (4) fermée.

## Claims

1. A multi-purpose passenger car, more particularly an estate car with a hatchback holding a lowerable rear window and having a movable rear roof portion against which the rear window abuts when closed, and without a transverse roof connection between the rear open portions of the side walls, characterised in that the hatchback (3) has two arms (3a, 3b) serving as window frames for the rear window (4) and pivoted to the upper rear end regions of the car body (2).

2. A passenger car according to claim 1, characterised in that the movable roof part (6) is constructed as a removable roof part or as a combination of a sliding part and a removable part.

3. A passenger car according to claim 1 or 2, characterised in that the hinges of the hatchback can be used for movement in rotation or for combined rotation and translation.

4. A passenger car according to any of claims 1 to 3, characterised in that the rear window (4) is automatically lowered when the hatchback (3) is opened.

5. A passenger car according to any of claims 1 to 4, characterised in that a roof rack (9) can be secured on the vehicle roof (5).

6. A passenger car according to claim 5, characterised in that the front portion of the roof rack (9) is pivotably disposed on the vehicle roof (5).

7. A passenger car according to claim 5 or 6, characterised in that the roof rack (9) has an upwardly-pivotable rear flap (10) which, when closed, cooperates with the raised rear window (4).

*Fig.1*

*Fig.2*

*Fig.3*

*Fig. 4*